# EUROPÄISCHE PATENTSCHRIFT

(11) **EP 4 310 548 B1**
(45) Veröffentlichungstag und Bekanntmachung des Hinweises auf die Patenterteilung: **18.11.2026**
(21) Anmeldenummer: 23186407.5
(22) Anmeldetag: 19.07.2023
(51) Int. Cl.: G01S 17/58, G01S 17/89, G01S 17/931

(54) **VORRICHTUNG UND VERFAHREN ZUR ÜBERWACHUNG EINER FAHRBAHN**
DEVICE AND METHOD FOR MONITORING A ROADWAY
DISPOSITIF ET PROCÉDÉ DE SURVEILLANCE D'UNE CHAUSSÉE

(30) Priorität: 20.07.2022 EP 22186060
(43) Veröffentlichungstag der Anmeldung: 24.01.2024
(73) Patentinhaber: SICK AG, 79183 Waldkirch (DE)
(72) Erfinder: Wittmeier, Steffen, Waldkirch (DE); Jarvis, Jan, Freiburg (DE); Ruh, Dominic, Freiburg (DE)

(56) Entgegenhaltungen:
- WO-A1-2022/076710
- US-A1- 2022 137 227

## Beschreibung

Die Erfindung betrifft eine Vorrichtung und ein Verfahren zur Überwachung einer Fahrbahn nach dem Oberbegriff von Anspruch 1 beziehungsweise Anspruch 8.

Ein Anwendungsgebiet der Objekterfassung mittels optoelektronischer Sensoren ist die Verkehrsüberwachung, beispielsweise zur Überprüfung von Fahrzeugregularien, Berechnung von Mautabgaben, Verkehrsleitung oder statistischer Verkehrsüberwachung. Es ist bekannt, die Fahrzeuge im fließenden Straßenverkehr an sogenannten Messbrücken zu erfassen, die beispielsweise optische Sensoren wie Laserscanner oder Kameras aufweisen, um die Fahrzeugkontur aufzunehmen. In einer entsprechenden Bildauswertung können anschließend beispielsweise Anzahl und Position der Fahrzeugachsen bestimmt werden. Die EP 3 183 721 B1 offenbart dazu ein System zur berührungslosen Achsenzählung eines Fahrzeugs mittels optischer Verfahren. Das System ist kamerabasiert und verwendet eine komplexe Bildverarbeitung, wobei weitere Sensorik verwendet werden kann, um die Bildverarbeitung hinsichtlich der Detektion von Fahrzeugen zu entlasten. Die bekannten visuellen Verfahren sind aber nicht besonders robust gegenüber schlechten Witterungsbedingungen. Da weiterhin die 3D-Verfahren in der Regel mit einer geringeren Auflösung arbeiten, sind sie besonders empfindlich gegenüber Schnee und Regen, weil die Schnee- und Spritzwasserdetektion die Messdaten erheblich verfälscht. Insgesamt kann also die Genauigkeit der Achsdetektion unbefriedigend sein und der Rechenaufwand für die Bildverarbeitung ist in der Regel hoch.

Die im Stand der Technik üblicherweise zur Objekterfassung verwendeten Bilderfassungssysteme, insbesondere Laserscanner und Kamerasysteme, weisen zudem Nachteile auf, auf die im Folgenden näher eingegangen werden soll.

Laserscanner oder LiDAR (Light Detection And Ranging) - Sensoren basieren meist auf einer direkten Lichtlaufzeitmessung. Hierbei wird ein Lichtpuls vom Sensor ausgesandt, an einem Objekt reflektiert und wieder vom Sensor detektiert. Die Laufzeit des Lichtpulses wird vom Sensor bestimmt und über die Lichtgeschwindigkeit im Propagationsmedium (in der Regel Luft) die Entfernung zwischen Sensor und Objekt geschätzt. Da die Phase der elektromagnetischen Welle hierbei nicht berücksichtigt wird, spricht man von einem inkohärenten Messprinzip. Bei einer inkohärenten Messung besteht die Notwendigkeit, Pulse aus vielen Photonen aufzubauen, um den reflektierten Puls mit ausreichendem Signal-Rausch-Verhältnis zu empfangen. Die Anzahl der Photonen innerhalb eines Pulses ist im industriellen Umfeld in der Regel durch den Augenschutz nach oben limitiert. In der Folge ergeben sich Abwägungen zwischen maximaler Reichweite, minimaler Remission des Objektes, Integrationszeit und den Anforderungen an das Signal-Rausch-Verhältnis des Sensorsystems. Inkohärente Strahlung bei gleicher Wellenlänge (Umgebungslicht) wirkt sich zudem direkt auf den dynamischen Bereich des Lichtempfängers aus. Beispiele für inkohärente Strahlung bei gleicher Wellenlänge sind die Sonne, ähnliche Sensorsysteme, oder das identische Sensorsystem über eine Mehrwegeausbreitung, also unerwünschte Reflexionen.

Aus dem Stand der Technik bekannte Kamerasysteme basieren auf Messprinzipien wie beispielsweise der Stereoskopie oder der indirekten Lichtlaufzeitmessung. Bei der indirekten Lichtlaufzeitmessung wird die Phasendifferenz eines AMCW (Amplitude Modulated Continous Wave)-Sendesignals und dessen zeitlich verzögerter Kopie nach Reflektion mit einem Objekt bestimmt. Die Phasendifferenz entspricht der Lichtlaufzeit und kann über die Lichtgeschwindigkeit im Propagationsmedium in einen Distanzwert umgerechnet werden. Sowohl die Stereoskopie als auch die indirekte Lichtlaufzeitmessung sind ebenfalls inkohärente Messverfahren mit den oben genannten Nachteilen.

Millimeterwellenlängen Radarsensoren basieren auf einem frequenz-modulierten-Dauerstrich-Messprinzip (FMCW) und können unter Ausnutzung des Dopplereffekts auch Radialgeschwindigkeiten eines erfassten Objekts bestimmen. Der größte Nachteil von millimeterwellenlängen Radarsensoren im Vergleich zu optischen Technologien ist die deutlich größere Wellenlänge und die damit geringere räumliche Auflösung. Darüber hinaus beschränken regulatorische Bestimmungen die radiale Auflösung durch Beschränkung der Bandbreite und in einem MIMO (Multiple Input Multiple Output) - Radarsystem die Anzahl an verfügbaren virtuellen Antennen (Produkt aus der Anzahl der Sende- und Empfangsantennen) die Winkelauflösung.

Aus der US 2022/137227 A1 ist eine Methode zur dopplerunterstützten Segmentierung von Punkten in einer Punktwolke für autonome Fahrzeuge (AV) bekannt Es beschreibt die Erfassung von Messpunkten mit Geschwindigkeitswerten und Koordinaten, die Identifizierung von Objekten in der Umgebung und die Bestimmung des Fahrwegs des AV basierend auf diesen Objekten. Die Methode verwendet kohärentes Lidar und verschiedene Sensoren zur präzisen Objekterkennung und -verfolgung.

Die WO 20221076710 A1 beschreibt eine Methode zur Kompensation von Phasenbeeinträchtigungen in einem LIDAR-System. Dies umfasst das Senden eines optischen Strahls, das Empfangen eines Rücksignals und die digitale Verarbeitung dieses Signals. Die Methode kompensiert Ego- und Zielgeschwindigkeit und führt eine Phasenkorrektur durch, um die Genauigkeit und Zuverlässigkeit des LIDAR-Systems zu verbessern

Es ist daher Aufgabe der Erfindung, eine Vorrichtung und ein Verfahren zur Überwachung einer Fahrbahn zu verbessern.

Diese Aufgabe wird durch eine Vorrichtung und ein Verfahren nach Anspruch 1 beziehungsweise 8 gelöst.

Die erfindungsgemäße Vorrichtung zur Überwachung einer Fahrbahn weist wenigstens einen optoelektronischen Sensor auf, der als frequenz-modulierter-Dauerstrich (Frequency Modulated Continuous Wave, FMCW) - LiDAR-Sensor ausgebildet ist. Grundlagen der FMGW-LiDAR Technologie sind beispielsweise in der wissenschaftlichen Veröffentlichung "Linear FMCW Laser Radar for Precision Range and Vector Velocity Measurements" (Pierrottet, D., Amzajerdian, F., Petway, L., Barnes, B., Lockard, G., & Rubio, M. (2008). Linear FMCW Laser Radar for Precision Range and Vector Velocity Measurements. MRS Proceedings, 1076, 1076-K04-06. doi:10.1557/PROC-1076-K04-06) oder der Doktorarbeit "Realization of Integrated Coherent LIDAR" (T. Kim, University of California, Berkeley, 2019. https://escholarship.org/uc/itern/1d67v62p) beschrieben.

Im Gegensatz zu einem auf Lichtlaufzeitmessung von Laserpulsen basierenden LiDAR-Sensor sendet ein FMCW-LiDAR-Sensor keine gepulsten, sondern kontinuierliche Sendelichtstrahlen in den Überwachungsbereich aus, die während einer Messung, also einer zeitdiskreten Abtastung eines Messpunktes im Überwachungsbereich, eine vorgegebene Frequenzmodulation, das heißt eine zeitliche Änderung der Wellenlänge des Sendelichts, aufweisen. Die Messfrequenz liegt dabei typischerweise im Bereich von 10 bis 30 Hz. Die Frequenzmodulation kann beispielsweise als periodische Auf- und Abwärtsmodulation ausgebildet sein. Von Messpunkten im Überwachungsbereich reflektiertes Sendelicht weist im Vergleich zum ausgestrahlten Sendelicht einen Zeitversatz entsprechend der Lichtlaufzeit auf, die von der Entfernung des Messpunktes vom Sensor abhängt und aufgrund der Frequenzmodulation mit einer Frequenzverschiebung einhergeht. Im FMCW-LiDAR-Sensor werden ausgestrahltes und reflektiertes Sendelicht kohärent überlagert, wobei aus dem Überlagerungssignal die Entfernung des Messpunktes vom Sensor bestimmt werden kann. Das Messprinzip der kohärenten Überlagerung hat im Vergleich zu gepulsten oder amplitudenmodulierten inkohärenten LiDAR-Messprinzipien unter anderem den Vorteil einer erhöhten Immunität bezüglich Fremdlicht von beispielsweise anderen optischen Sensoren/Sensorsystemen oder der Sonne. Gegenüber Radarsensoren mit Wellenlängen im Bereich von Millimetern verbessert sich die Ortsauflösung, wodurch geometrische Eigenschaften eines Objekts messbar werden.

Bewegt sich ein Messpunkt mit einer Radialgeschwindigkeit auf den Sensor zu oder vom Sensor weg, weist das reflektierte Sendelicht zusätzlich eine Dopplerverschiebung auf. Diese Veränderung der Sendelichtfrequenz kann ein FMCW-LiDAR-Sensor bestimmen und daraus die Entfernung und die Radialgeschwindigkeit eines Messpunkts in einer einzigen Messung, also einer einmaligen Abtastung eines Messpunktes, bestimmen, während bei einem auf Lichtlaufzeitmessung von Laserpulsen basierenden LiDAR-Sensor für eine Bestimmung der Radialgeschwindigkeit wenigstens zwei Messungen, also zwei zeitlich beabstandete Abtastungen des gleichen Messpunktes, nötig sind.

Bei zeit- und raumdiskreter Abtastung eines dreidimensionalen Überwachungsbereichs kann ein FMCW-LiDAR-Sensor folgende Messdaten erfassen: ${M}_{j , k , l} = \left(\begin{matrix}{r}_{j , k , l} \\ {v}_{j , k , l}^{r} \\ {I}_{j , k , l}\end{matrix}\right) .$

Hierbei bezeichnen *r_{j,k,l}* den Radialabstand, *v^{r}_{j,k,l}* die Radialgeschwindigkeit und *l_{j,k,l}* die Intensität jedes raumdiskreten Messpunktes *j, k* mit zweidimensionaler, durch Azimuthwinkel *φ* und Polarwinkel *θ* angegebener Position (*φ_{j,} θₖ*) für jede zeitdiskrete Abtastung I. Zur einfachen Lesbarkeit wird im Folgenden der Index n für eine einmalige zeitdiskrete Abtastung eines raumdiskreten, zweidimensionalen Messpunkts (*φ_{j,} θₖ*) im dreidimensionalen Überwachungsbereich verwendet.

Zur Überwachung der Fahrbahn weist die erfindungsgemäße Vorrichtung einen oder mehrere FMCW-LiDAR-Sensoren auf, die so über und/oder neben einer zu überwachenden Fahrspur der Fahrbahn angeordnet sind, dass eine oder beide Seiten eines Fahrzeugs erfasst werden können, wenn das Fahrzeug den oder die FMCW-LiDAR-Sensoren passiert.

Zur Auswertung der vom FMCW-LiDAR-Sensor erfassten Messdaten weist die erfindungsgemäße Vorrichtung eine Steuer- und Auswerteeinheit auf, die dazu ausgebildet ist, die Messpunkte zu segmentieren und dem Fahrzeug und/oder wenigstens einem dem Fahrzeug zugehörigen Objektsegment zuzuordnen. Als Objektsegmente sind dabei beispielsweise einzelne Teile des Fahrzeugs zu verstehen, beispielsweise eine Karosserie, Karosserieteile oder Räder des Fahrzeugs.

Die Steuer- und Auswerteeinheit ist weiterhin dazu ausgebildet, unter Verwendung von ortsaufgelösten Radialgeschwindigkeiten von wenigstens einem ersten Objektsegment zugeordneten Messpunkten ein Bewegungsmuster des ersten Objektsegments zu bestimmen. Als Bewegungsmuster ist eine charakteristische Eigenbewegung des Objektsegments, beispielsweise eine Rotation oder eine Relativbewegung des Objektsegments zum Fahrzeug selbst oder zu einem weiteren Objektsegment zu verstehen, welche sich durch ein Radialgeschwindigkeitsprofil der dem Objektsegment zugeordneten Messpunkte ergibt. Eine entsprechende charakteristische Eigenbewegung beziehungsweise charakteristisches Radialgeschwindigkeitsprofil kann beispielsweise als vorbestimmtes Bewegungsmuster in der Steuer- und Auswerteeinheit gespeichert, in einem Einlernvorgang erfasst oder während des Betriebs der Vorrichtung mittels Methoden des maschinellen Lernens oder künstlicher Intelligenz bestimmt werden.

Die Verwendung der ortsaufgelösten Radialgeschwindigkeiten zur Bestimmung eines Bewegungsmusters der einem ersten Objektsegment zugeordneten Messpunkte hat den Vorteil, dass sich das Bewegungsmuster des Objektsegments schnell und zuverlässig bestimmen lässt.

Die Steuer- und Auswerteeinheit ist dazu ausgebildet, eine Geschwindigkeit des Fahrzeugs zu bestimmen, mit der sich das Fahrzeug entlang der Fahrbahn bewegt. Dazu kann die Steuer- und Auswerteeinheit dazu eingerichtet sein, Messpunkte auf statischen Objektsegmenten des Fahrzeugs zu selektieren. Als statische Objektsegmente des Fahrzeugs sind dabei die Objektesegmente zu verstehen, die gegenüber dem Fahrzeug in Gesamtheit keine Eigenbewegung aufweisen. Ein rotierendes Rad des Fahrzeugs würde demnach nicht zu den statischen Objektsegmenten gehören, wohingegen Messpunkte auf Karosserieteilen, insbesondere oberhalb der Räder des Fahrzeugs, in der Regel zu den statischen Objektsegmenten des Fahrzeugs zählen.

Zur Bestimmung der Geschwindigkeit, mit der sich das Fahrzeug entlang der Fahrbahn bewegt, kann die Steuer- und Auswerteeinheit weiterhin dazu ausgebildet sein, die Radialgeschwindigkeiten der Messpunkte auf statischen Objektsegmenten des Fahrzeugs unter Verwendung einer lateralen Winkeldifferenz zwischen einer Bewegungsrichtung des Fahrzeugs und einer Messrictitung des FMCW-LiDAR-Sensors, also der Richtung des den Messpunkt abtastenden Sendelichtstrahls, in Geschwindigkeiten der Messpunkte entlang der Bewegungsrichtung des Fahrzeuges umzurechnen und einen Mittelwert der umgerechneten Geschwindigkeiten zu bilden. Die Bewegungsrichtung beziehungsweise ein die Richtung repräsentierender Bewegungsvektor des Fahrzeugs kann durch den Verlauf der Fahrbahn vorgegeben sein.

Die Steuer- und Auswerteeinheit kann bevorzugt dazu eingerichtet sein, die Bewegungsrichtung beziehungsweise den Bewegungsvektor aus den Messdaten zu bestimmen, wobei zunächst die Messpunkte auf den statischen Objektsegmenten des Fahrzeugs selektiert werden und mit Hilfe der Vektoren der zugehörigen Sendelichtstrahlen des FMCW-LiDAR-Sensors und der gemessenen Radialgeschwindigkeiten ein lineares Optimierungsproblem formuliert wird, das mittels der Methode der kleinsten Quadrate gelöst werden kann. Das hierfür erforderliche Vorgehen ist beispielsweise in "Guo, Mian, Kai Zhong, and Xiaozhi Wang. "Doppler velocity-based algorithm for clustering and velocity estimation of moving objects." 2022 7th International Conference on Automation, Control and Robotics Engineering (CACRE). IEEE, 2022." beschrieben.

Alternativ oder zusätzlich kann die Geschwindigkeit, mit der sich das Fahrzeug entlang der Fahrbahn bewegt, auch mit einem weiteren geeigneten Sensor bestimmt werden, beispielsweise durch einen Laser- oder Radarsensor oder durch Induktionsschleifen in der Fahrbahn.

Durch die Bewegung des Fahrzeugs relativ zum FMCW-LiDAR-Sensor während der Erfassung der Messdaten, also einer Abtastung des Überwachungsbereichs des FMCW-LiDAR-Sensors, kann es zu einer zeitlichen Verzerrung der Messdaten kommen. Die Steuer- und Auswerteeinheit ist daher dazu ausgebildet, die Messdaten der dem Fahrzeug und/oder den Objektsegmenten zugeordneten Messpunkte zu entzerren, wobei zunächst aus der Geschwindigkeit, mit der sich das Fahrzeug entlang der Fahrbahn bewegt und der Bewegungsrichtung des Fahrzeugs ein Geschwindigkeitsvektor gebildet wird. Die Steuer- und Auswerteeinheit ist dann dazu eingerichtet, unter Verwendung des Geschwindigkeitsvektors, und einem relativen Zeitstempel des jeweiligen Sendelichtstrahls beziehungsweise Messpunkts innerhalb der Erfassung der Messdaten einen Korrekturvektor zu berechnen, der zum ursprünglich gemessenen Auftreffpunkt des jeweiligen Sendelichtstrahls beziehungsweise den ursprünglichen Ortskoordinaten des jeweiligen Messpunkts addiert wird. Die Entzerrung der Messdaten hat den Vorteil, dass geornetrische Eigenschaften des Fahrzeugs beziehungsweise der Objektsegmente, wie beispielsweise die Kreisform von Rädern, wieder hergestellt werden. Damit ist eine weiter verbesserte Segmentierung der Messpunkte möglich.

Die Steuer- und Auswerteeinheit ist dazu ausgebildet, die entzerrten Messdaten auf die Geschwindigkeit, mit der sich das Fahrzeug entlang der Fahrbahn bewegt, zu normieren. Dadurch können Messpunkte auf rotierenden Rädern, die aufgrund der Rotation der Räder Geschwindigkeiten aufweisen, die sich von der Geschwindigkeit, mit der sich das Fahrzeug entlang der Fahrbahn bewegt, unterscheiden, leicht detektiert werden, beispielsweise mittels einer Schwellenwertauswertung, die die Messdaten basierend auf einer Abweichung der Messpunktgeschwindigkeit von der Geschwindigkeit, mit der sich das Fahrzeug entlang der Fahrbahn bewegt, filtern kann.

Die Steuer- und Auswerteeinheit kann weiterhin dazu ausgebildet sein, den Überwachungsbereich des FMCW-LiDAR-Sensors mehrfach abzutasten und eine Vielzahl von zeitlich aufeinanderfolgenden Abtastungen zusammenzufassen, wobei analog zur Entzerrung der Messdaten die dem Fahrzeug und/oder den Objektsegmenten zugeordneten Messpunkte der jeweiligen Abtastungen des Überwachungsbereichs unter Berücksichtigung von Zeitstempeln der jeweiligen Abtastungen und von pro Abtastung geschätzten Geschwindigkeitsvektoren zusammengefasst werden. Die Zusammenfassung einer Vielzahl von Abtastungen des Überwachungsbereichs hat den Vorteil, dass diese eine höhere räumliche Auflösung aufweist und Objekte und/oder Objektsegmente daher besser segmentiert werden können. Durch die Zusammenfassung einer Vielzahl von Abtastungen des Überwachungsbereichs können beispielsweise Fahrzeuge vollständig erfasst werden, deren Längsausdehnung größer als der Überwachungsbereich des FMCW-LiDAR-Sensors ist.

Im Rahmen der Verkehrsüberwachung kann beispielsweise anhand des Bewegungsmusters von Rädern eines Fahrzeugs erkannt werden, ob sich die Räder des Fahrzeugs drehen oder nicht. Somit kann beispielsweise eine Achserkennung, insbesondere eine Erkennung angehobener Achsen verbessert werden, da sich die Räder einer angehobenen Achse nicht beziehungsweise nicht mit derselben Geschwindigkeit drehen wie Räder, die Fahrbahnkontakt haben. Die Detektion von angehobenen Achsen ist beispielsweise für die Erhebung von Mautgebühren relevant.

Das Segmentieren und Zuordnen der Messpunkte zu wenigstens einem Objekt und/oder wenigstens einem dem Objekt zugehörigen Objektsegment kann bevorzugt unter Verwendung der ortsaufgelösten Radialgeschwindigkeit der Messpunkte erfolgen. Durch die Verwendung der ortsaufgelösten Radialgeschwindigkeit als zusätzlichem Parameter ist eine verbesserte Segmentierung der Messdaten möglich.

In einer Ausführungsform kann die Steuer- und Auswerteeinheit dazu ausgebildet sein, die Messdaten unter Verwendung der Radialgeschwindigkeiten der Messpunkte zu filtern. Somit kann bereits vor einer Segmentierung der Messpunkte der Rechenaufwand durch Datenreduktion vermindert werden. Eine Filterung kann beispielsweise dadurch erfolgen, dass Messpunkte mit einer Radialgeschwindigkeit kleiner, größer oder gleich einem vorgegebenen Schwellenwert verworfen und keiner weiteren Auswertung zugeführt werden.

Vorzugsweise kann wenigstens ein weiterer FMCW-LiDAR-Sensor vorgesehen sein, der einen weiteren Überwachungsbereich abtastet, wobei sich die Überwachungsbereiche überlappen können. Dadurch können Abschattungen oder tote Winkel, in denen keine Objekterfassung möglich ist, vermieden werden. Werden zwei oder mehrere FMCW-LiDAR Sensoren so zueinander angeordnet, dass orthogonal zueinanderstehende Messtrahlen erzeugt werden können, kann durch Verrechnung dieser Messstrahlenpaare ein Geschwindigkeitsvektor eines durch diese Messstrahlen abgetasteten Objekts in der durch die orthogonal zueinanderstehenden Messtrahlen aufgespannten Ebene bestimmt werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: ein Beispiel für eine Radialgeschwindigkeitsmessung mit einem FMCW-LiDAR-Sensor;
- Fig. 2: eine schematische Darstellung einer erfindungsgemäßen Vorrichtung zur Verkehrsüberwachung;
- Fig. 3: ein Ablaufdiagram für eine beispielhafte erfindungsgemäße Verarbeitung von Messdaten eines FMCW-LiDAR-Sensors;
- Fig. 4: ein Ablaufdiagram für eine Erfassung eines Fahrzeugs unter Verwendung eines erfindungsgemäßen Verfahrens;

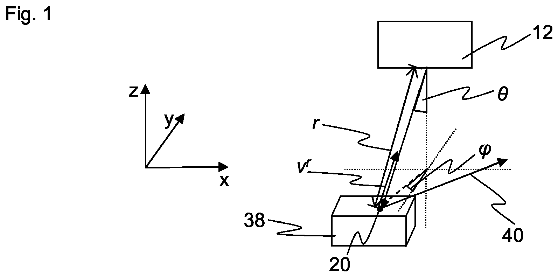

In Figur 1 ist das Konzept der Radialgeschwindigkeitsmessung mit einem FMWC-LIDAR-Sensor 12 an einem dreidimensionalen Beispiel gezeigt. Bewegt sich ein Objekt 38 entlang einer Bewegungsrichtung 40 relativ zum FMCW-LiDAR-Sensor 12, kann der FMCW-LiDAR-Sensor 12 neben dem Radialabstand r und der Intensität *I* eines mit einem Sendelichtstrahl 14 unter einem Azimuthwinkel φ und einem Polarwinkel θ einmalig zeitdiskret abgetasteten Messpunkts 20 die Radialgeschwindigkeit *v^{r}* des Messpunkts 20 des Objekts 38 in Richtung des FMCW-LiDAR-Sensors 12 bestimmen. Diese Information steht direkt mit einer Messung, also einer zeitdiskreten Abtastung des Messpunktes 20 zur Verfügung. Zur Identifikation bewegter Objekte entfällt somit im Unterschied zu Messverfahren, die lediglich ortsaufgelöste Radialabstände, also dreidimensionale Positionen, liefern, die Notwendigkeit einer zweiten Messung und insbesondere die Notwendigkeit, in den Messdaten der zweiten Messung zunächst die Messpunkte zu ermitteln, die den Messpunkten der ersten Messung entsprechen.

Im Falle eines statischen FMCW-LiDAR-Sensors ist jeder Messpunkt mit einer Radialgeschwindigkeit von Null in der Regel einem statischen Objekt zugeordnet, sofern sich dieses nicht tangential zum Messstrahl des Sensors bewegt. Aufgrund der endlichen Objektausdehnung und der hohen räumlichen Auflösung des FMCW-LiDAR-Sensors wird praktisch jedes bewegte Objekt wenigstens einen Messpunkt 20 mit einer von Null verschiedenen Radialgeschwindigkeit *v^{r}ₙ* zum FMCW-LiDAR-Sensor 12 aufweisen. Daher lassen sich bereits mit einer Messung des FMCW-LiDAR-Sensors 12 statische und bewegte, beziehungsweise in mobilen Applikationen sich entfernende oder nähernde Objekte unterscheiden. So können beispielsweise bei einer Antikollisionsüberwachung sich entfernende Messpunkte respektive sich entfernende Objekte verworfen werden. Durch eine entsprechende Datenreduktion werden Rechenaufwände bei der weiteren Auswertung der Messdaten reduziert.

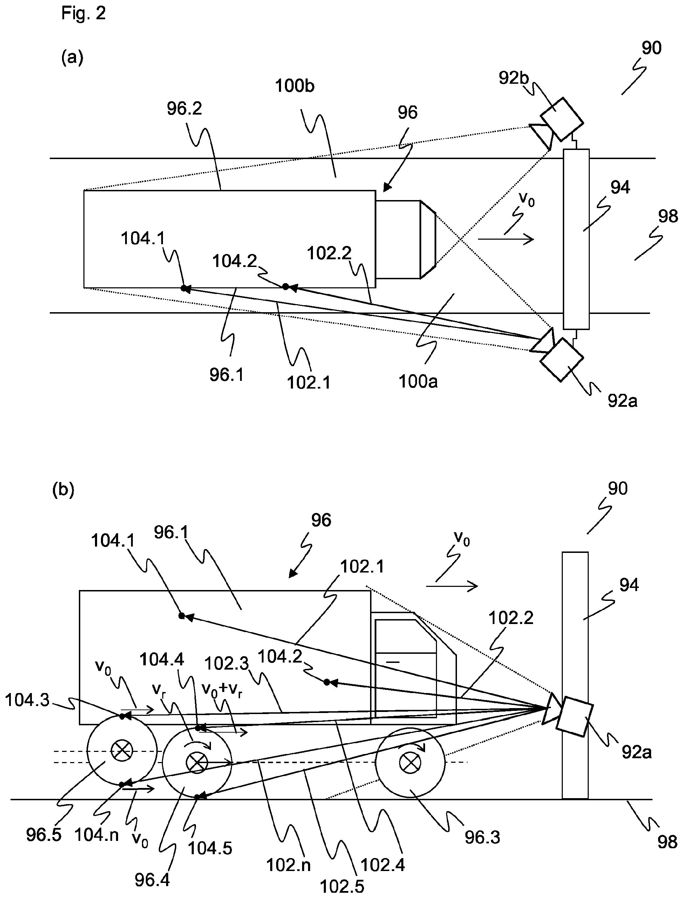

Figur 2 zeigt eine schematische Darstellung ((a) Draufsicht, (b) Seitenansicht) einer erfindungsgemäßen Vorrichtung 90 zur Verkehrsüberwachung. Einer oder mehrere FMCW-Lidar-Sensoren 92a, 92b sind an einer sogenannten Maut- oder Verkehrszeichenbrücke 94 angeordnet, um ein Fahrzeug, in diesem Fall einen LKW 96, auf einer Fahrbahn 98 zu erfassen. Die FMCW-LiDAR-Sensoren 92a, 92b sind so über oder seitlich der zu überwachenden Fahrbahn 98 angeordnet, dass eine oder beide Fahrzeugseiten 96.1, 96.2, sowie Räder 96.3, 96.4, 96.5 des Fahrzeugs 96 erfasst werden, wenn das Fahrzeug 96 den Überwachungsbereich 100a, 100b der Sensoren 92a, 92b passiert.

Die FMCW-LiDAR-Sensoren 92a, 92b senden Sendelichtstrahlen 102.1, ..., 102.n in die dreidimensionalen Überwachungsbereiche 100a, 100b der Sensoren 92a, 92b aus und erzeugen Messdaten aus von Messpunkten 104.1, ..., 104.n in den Überwachungsbereichen 100a, 100b zurück zu den Sensoren 92a, 92b reflektiertem oder remittiertem Sendelicht. Die Messdaten werden von einer Steuer- und Auswerteeinheit (nicht gezeigt) ausgewertet.

Messpunkte 104.1, 104.2 auf statischen Objektsegmenten des Fahrzeugs 96, beispielsweise der Fahrzeugseite 96.1, weisen in den Messdaten Radialgeschwindigkeiten auf, die sich von der Geschwindigkeit des Fahrzeugs in Bewegungsrichtung wie in Figur 1 beschrieben, lediglich aufgrund der lateralen Winkeldifferenz zwischen Bewegungsrichtung und Messrichtung unterscheiden. Messpunkte 104.4, 104.5 an Objektsegmenten mit einer gegenüber dem Fahrzeug relativen Zusatzbewegung wie beispielsweise rotierende Räder 96.3, 96.4 weisen in den Messdaten Radialgeschwindigkeiten auf, die sich signifikant von den Radialgeschwindigkeiten der statischen Objektsegmente des Fahrzeugs unterscheiden. Zu statischen Objektsegmenten des Fahrzeugs können insbesondere Räder 96.5 an einer angehobenen Achse des Fahrzeugs 96 gehören, da diese nicht rotieren.

Eine Betrachtung der in b) dargestellten Seitenansicht des Fahrzeugs 96 verdeutlicht dies. Ein Messpunkt 104.4 am höchsten Punkt des Rades 96.4 mit Fahrbahnkontakt weist zusätzlich zur Bewegungsgeschwindigkeit v₀ des Fahrzeugs eine Rotationskomponente vᵣ auf, wodurch sich eine Gesamtgeschwindigkeit von v₀+ vᵣ ergibt. Am Messpunkt 104.5, an dem das Rad 96.4 die Fahrbahn 98 berührt, heben sich aufgrund der Rotationsrichtung die Rotationsgeschwindigkeit vᵣ und die Bewegungsgeschwindigkeit v₀ des Fahrzeugs auf. Mithin wird die Radialgeschwindigkeit dieses Messpunktes 104.5 am rotierenden Rad 96.4 vom Sensor mit 0 bemessen. Damit ergibt sich für ein rotierendes Rad ein charakteristisches Bewegungsmuster beziehungsweise Radialgeschwindigkeitsprofil, welches aus den gemessenen Radialgeschwindigkeiten bestimmt werden kann.

Ein Rad 96.5 an einer angehobenen Achse wird in der Regel nicht rotieren und weist daher an allen Messpunkten 104.3, 104.n dieselbe Geschwindigkeit v₀ auf, die der Bewegungsgeschwindigkeit v₀ des Fahrzeugs 96 entspricht.

Somit lassen sich am Fahrzeug rotierende Räder beziehungsweise Achsen zuverlässig detektieren, womit eine verbesserte Achsenzählung ermöglicht wird.

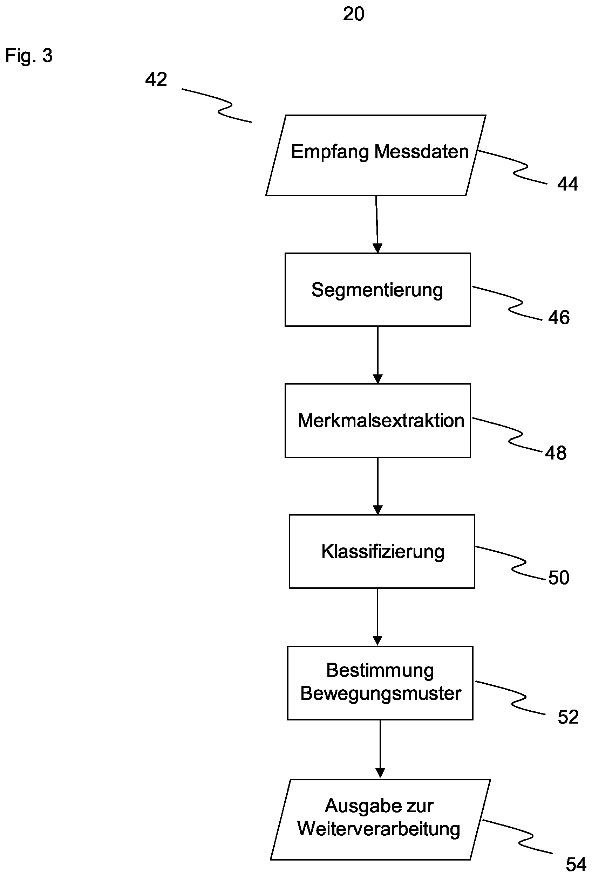

Figur 3 zeigt in einem Ablaufdiagram 42 eine beispielhafte erfindungsgemäße Verarbeitung der vom FMCW-LiDAR-Sensor erfassten Messdaten durch die Steuer- und Auswerteeinheit. Nach dem Empfang 44 der Messdaten werden in einem Segmentierungsschritt 46 die Messpunkte 104.1, ..., 104.n segmentiert und zu einem Fahrzeug 96 und/oder Objektsegmenten 96.1, ...96.5 des Fahrzeugs zusammengefasst, wobei zusätzlich zu den üblicherweise zur Segmentierung 46 verwendeten Ortskoordinaten und Intensitäten der Messpunkte insbesondere die ortsaufgelösten Radialgeschwindigkeiten *v^{r}ₙ* der Messpunkte 104.1, ..., 104.n berücksichtigt werden können. Objektsegmente können beispielsweise Räder 96.3, 96.4, 96.5 eines Fahrzeugs 96 sein.

Die Segmentierung 46 kann nach bekannten Verfahren der digitalen Bildverarbeitung beziehungswiese des maschinellen Sehens erfolgen, wie beispielsweise
- Pixelorientierte Verfahren im Grauwertbild mittels Schwellenwert-Verfahren,
- Kantenorientierte Verfahren wie dem Sobel- oder Laplace-Operator und einer Gradientensuche,
- Regionenorientierte Verfahren wie "Region-Growing", "Region-Splitting", "Pyramid Linking" oder "Split and Merge",
- Modellbasierte Verfahren wie bspw. die Hough-Transformation, oder
- Texturorientierte Verfahren.

Weiterhin sind unter dem Begriff "Range segmentation" spezielle Verfahren zur Segmentierung von dreidimensionalen Datensätzen bekannt. Die "Range segmentation" ist beispielsweise in den folgenden wissenschaftlichen Veröffentlichungen beschrieben:
- "Fast Range Image-Based Segmentation of Sparse 3D Laser Scans for Online Operation" (Bogoslavskyi et al., 2016 IEEE/RSJ International Conference on Intelligent Robots and Systems, DOI: 10.1109/IROS.2016.7759050)
- "Laser-based segment classification using a mixture of bag-of-words". (Behley et al., 2013 IEEE/RSJ International Conference on Intelligent Robots and Systems, DOI: 10.1109/IROS.2013.6696957)
- "On the segmentation of 3d lidar point clouds" (Douillard et al., 2011 IEEE International Conference on Robotics and Automation, DOI: 10.1109/ICRA.2011.5979818)

Durch die Verwendung der Radialgeschwindigkeit *v^{r}ₙ* zusätzlich zum Radialabstand *rₙ* und der Intensität *Iₙ* der Messpunkte, 104.1, ..., 104.n kann die Segmentierung 46 der Messpunkte 104.1, ..., 104.n mit den oben aufgeführten Verfahren effizienter und genauer erfolgen. Beispielsweise können Messpunkte 104.1, ..., 104.n mit Radialgeschwindigkeiten *v^{r}ₙ* kleiner, größer oder gleich einem vorgegebenen Schwellenwert verworfen und keiner weiteren Auswertung zugeführt werden. Wird ein Objekt und/oder Objektsegment durch mehrere raumdiskrete Messpunkte abgetastet und sind die dazugehörigen Radialgeschwindigkeiten unterscheidbar, können statische und dynamische Objekte und/oder Objektsegmente unterschieden werden und so stationäre Objekte und/oder Objektsegmente wie die Fahrbahn 98 bereits vor beziehungsweise während der Segmentierung 46 der Messpunkte 104.1, ..., 104.n verworfen und der Rechenaufwand durch Datenreduktion vermindert werden.

Im nächsten Schritt erfolgt eine Merkmalsextraktion 48 der während der Segmentierung 46 definierten Objekte 96 und/oder Objektsegmente 96.1, ..., 96.5. Typische Merkmale, die bei der Verarbeitung der Messdaten aus den Objekten 96 und/oder Objektsegmenten 96.1, ..., 96.5 extrahiert werden können, sind beispielsweise Breite, Anzahl der Messpunkte oder Länge des Umfangs der Objekte und/oder Objektsegmente, oder weitere Merkmale, wie sie beispielsweise in der wissenschaftlichen Veröffentlichung "A Layered Approach to People Detection in 3D Range Data" (Spinello et al., Proceedings of the Twenty-Fourth AAAI Conference on Artificial Intelligence, AAAI 2010) beschrieben sind. Erfindungsgemäß können diese Merkmale um Merkmale, die auf den Radialgeschwindigkeiten der Objekte, 96 und/oder Objektsegmente 96.1, ..., 96.5 basieren, erweitert werden. Dazu werden zunächst Radialgeschwindigkeiten der Objekte und/oder Objektsegmente bestimmt, beispielsweise durch Anwendung trigonometrischer Funktionen auf die Radialgeschwindigkeiten der das jeweilige Objekt und/oder Objektsegment repräsentierenden Messpunkte. Als zusätzliche Objekt- und/oder Objektsegmentmerkmale können dann beispielsweise statistische Maße der Radialgeschwindigkeiten der Objekte und/oder Objektsegmente wie Mittelwert, Standardabweichung, höhere Momente oder Histogramme, welche charakteristisch für eine Roboter- und/oder Personenbewegungen sind, verwendet werden.

Nach der Merkmalsextraktion 48 erfolgt eine Klassifizierung 50 der Objekte 96 und/oder Objektsegmente 96.1, ..., 96.5 mit bekannten Klassifizierungsverfahren wie beispielsweise Bayes-Klassifikatoren, Support Vector Machines oder künstlichen neuronalen Netzen. Im Rahmen der Klassifizierung wird der Merkmalsraum nach Gruppen von Merkmalen durchsucht, die ein Objekt definieren. Hierbei können die oben aufgeführten statistischen Maße der Radialgeschwindigkeit einzelner Objekte 96 und/oder Objektsegmente 96.1, ..., 96.5 in Kombination mit a priori Informationen verwendet werden, um Merkmalsräume zu definieren, die Fahrzeuge 96 aufgrund ihrer Radialgeschwindigkeit klassifizieren und somit unterscheiden können.

In einem weiteren Schritt 52 erfolgt nun die Bestimmung eines Bewegungsmusters wenigstens eines der Objektsegmente 96.1, ..., 96.5 unter Verwendung der Radialgeschwindigkeiten der dem wenigstens einem Objektsegment zugeordneten Messpunkte 104.1, ..., 104.n.

Im Gegensatz zur typischen Bestimmung eines "Rigid Scene Flow" auf Basis von 3D Positionsdaten wie beispielsweise in
- Dewan, Ayush, et al. "Rigid scene flow for 3d lidar scans." 2016 IEEE/RSJ International Conference on Intelligent Robots and Systems (IROS). IEEE, 2016.
   oder
- Liu, Xingyu, Charles R. Qi, and Leonidas J. Guibas. "Flownet3d: Learning scene flow in 3d point clouds." Proceedings of the IEEE Conference on Computer Vision and Pattern Recognition, 2019.
beschrieben, können die gemessenen Radialgeschwindigkeitswerte direkt zur Erkennung eines Bewegungsmusters verwendet werden, so dass insbesondere zwei zeitlich aufeinanderfolgende Abtastungen *M_{n,l}* und *M_{n,l-1}* des Überwachungsbereichs nicht zwingend notwendig sind.

Das Ergebnis der Bestimmung des Bewegungsmusters 52 kann nach der Ausgabe 54 von der Steuer -und Auswerteeinheit weiterverarbeitet werden, beispielsweise zur Zustandserkennung eines Objektssegments (Rad rotiert oder nicht).

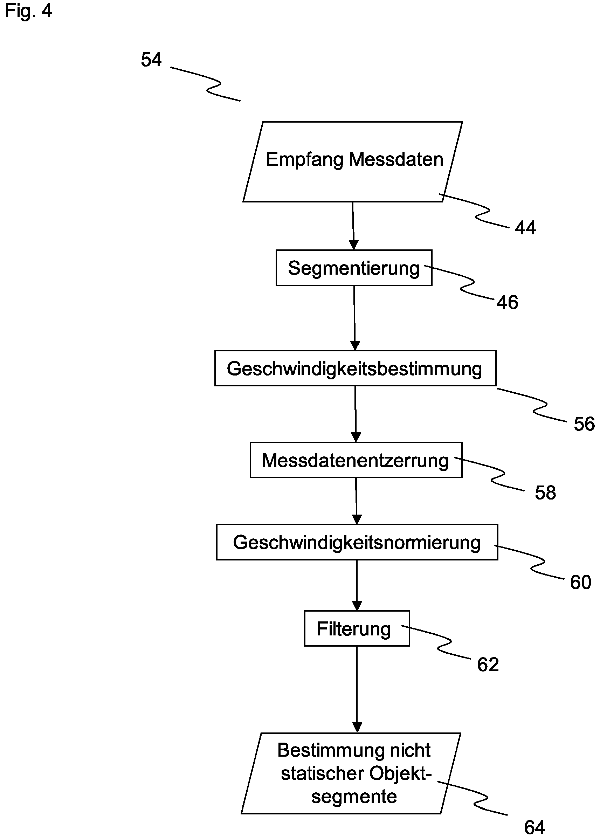

Figur 4 zeigt ein beispielhaftes Ablaufdiagramm 54 zur Erfassung eines Fahrzeugs 96 unter Verwendung eines erfindungsgemäßen Verfahrens. Nach Empfang 44 der Messdaten *Mₙ* erfolgt eine Selektion 46 von Messdaten *Mₙ,* die statischen Objektsegmenten des Fahrzeugs 96 zugeordnet sind. Als statische Objektsegmente des Fahrzeugs sind dabei Objektsegmente zu verstehen, die gegenüber dem Fahrzeug in Gesamtheit keine Eigenbewegung aufweisen wie beispielsweise die Fahrzeugseiten 96.1, 96.2 der Karosserie des Fahrzeugs 96. Die Selektion kann beispielsweise unter Annahme erfolgen, dass Fahrzeugteile oberhalb der normalerweise rotierenden Räder eines fahrenden Fahrzeugs 96 in der Regel statische Objektsegmente des Fahrzeugs 96 sind.

Auf Basis der selektierten Messpunkte erfolgt im nächsten Schritt eine Bestimmung 56 der Geschwindigkeit v₀, mit der sich das Fahrzeug 96 entlang der Fahrbahn 98 bewegt. Eine Betrachtung der in Figur 2a) dargestellten Draufsicht des Fahrzeugs 96 verdeutlicht, dass die Sendelichtstrahlen 102.1, 102.2 des FMCW-LiDAR-Sensors eine laterale Winkeldifferenz zur Bewegungsrichtung beziehungsweise dem Geschwindigkeitsvektor des Fahrzeug 96 aufweisen. Dadurch werden für die Messpunkte 104.1, 104.2 unterschiedliche Radialgeschwindigkeiten gemessen, die unter Verwendung der Winkeldifferenz zwischen Bewegungsrichtung des Fahrzeugs 96 und Richtung der Sendelichtstrahlen 102.1, 102.2 in eine Geschwindigkeit, mit der sich die Messpunkte 104.1, 104.2 entlang der Bewegungsrichtung des Fahrzeugs 96 bewegen, umgerechnet werden können. Aus dem Mittelwert der so errechneten Geschwindigkeiten ergibt sich dann die Geschwindigkeit v₀, mit der sich das Fahrzeug 96 entlang der Fahrbahn 98 bewegt.

Im folgenden Schritt wird eine Entzerrung 58 der Messdaten durchgeführt, wobei zunächst aus der Geschwindigkeit v₀, mit der sich das Fahrzeug 96 entlang der Fahrbahn 98 bewegt und der Bewegungsrichtung des Fahrzeugs der Geschwindigkeitsvektor gebildet wird. Die Steuer- und Auswerteeinheit ist dann dazu eingerichtet, unter Verwendung des Geschwindigkeitsvektors und einem relativen Zeitstempel des jeweiligen Sendelichtstrahls innerhalb einer Messung einen Korrekturvektor zu berechnen, der zum ursprünglich gemessenen Auftreffpunkt des jeweiligen Sendelichtstrahls addiert wird.

Im nächsten Schritt erfolgt eine Normierung 60 der Messdaten auf die Geschwindigkeit, mit der sich das Fahrzeug entlang der Fahrbahn bewegt. Damit weisen alle Messpunkte, die statischen Objektsegmenten des Fahrzeugs 96 zugeordnet sind, im Wesentlichen die Geschwindigkeit v₀ auf, mit der sich das Fahrzeug 96 entlang der Fahrbahn 98 bewegt. Messpunkte auf nicht statischen Objektsegmenten wie rotierenden Rädern 96.3, 96.4 des Fahrzeugs 96 hingegen weisen, wie in Figur 2 erläutert, abweichende Geschwindigkeiten auf.

Im darauffolgenden Schritt kann eine Filterung 62 der Messdaten mittels einer Schwellenwertauswertung erfolgen, wobei nicht statische Objektsegmente wie rotierende Räder 96.3, 96.4 beispielsweise durch eine Filterung auf alle Messpunkte, die Geschwindigkeiten kleiner oder größer der 5-fachen Standardabweichung der Geschwindigkeit v₀ aufweisen, mit der sich das Fahrzeug 96 entlang der Fahrbahn 98 bewegt, zuverlässig erkannt werden können, so dass eine Bestimmung 64 nicht statischer Objektsegmente ermöglicht wird.

## Patentansprüche

1. Vorrichtung (90) zur Überwachung einer Fahrbahn (98) und Erfassung wenigstens eines eine Vielzahl von Objektsegmenten (96.1, ..., 96.5) umfassenden Fahrzeugs (96) in einem Überwachungsbereich (100a, 100b) mit
- wenigstens einem FMCW-LIDAR-Sensor (92a, 92b) zum Aussenden von Sendelichtstrahlen (102.1, ..., 102.n) in den Überwachungsbereich (100a, 100b), zum Abtasten einer Vielzahl von Messpunkten (104.1, ..., 104.n) und zum Erzeugen von Messdaten (18) aus von den Messpunkten (104.1, ..., 104.n) remittiertem oder reflektiertem Sendelicht, wobei die Messdaten Radialgeschwindigkeiten (*v^{r}ₙ*) der Messpunkte (104.1, ..., 104.n) umfassen, wobei der FMCW-LIDAR-Sensor (92a, 92b) so angeordnet ist, dass wenigstens eine Seite des Fahrzeugs (96) erfasst werden kann, wenn das Fahrzeug (96) den FMCW-LiDAR-Sensor (92a, 92b) passiert.
- einer Steuer- und Auswerteeinheit zur Auswertung der Messdaten (18), wobei die Steuer- und Auswerteeinheit dazu ausgebildet ist, die Messpunkte (104.1, ..., 104.n) zu segmentieren und zumindest teilweise den Objektsegmenten (96.1, ..., 96.5) zuzuordnen, unter Verwendung der Radialgeschwindigkeiten (*v^{r}ₙ*) der den Objektsegmenten (96.1, ..., 96.5) zugeordneten Messpunkten ein Bewegungsmuster wenigstens eines der Objektsegmente (96.1, ..., 96.5) zu bestimmen, eine Geschwindigkeit (*v₀*) zu bestimmen, mit der sich das Fahrzeug (96) entlang der Fahrbahn (98) bewegt, und die Messdaten (18) der den Objektsegmenten (96.1, ..., 96.5) zugeordneten Messpunkte unter Verwendung der Geschwindigkeit (*v₀*), mit der sich das Fahrzeug (96) entlang der Fahrbahn (98) bewegt, zu entzerren, **dadurch gekennzeichnet, dass** die Steuer- und Auswerteeinheit dazu ausgebildet ist, die entzerrten Messdaten auf die Geschwindigkeit (*v₀*), mit der sich das Fahrzeug (96) entlang der Fahrbahn (98) bewegt, zu normieren.

2. Vorrichtung nach Anspruch 1, wobei die Steuer- und Auswerteeinheit dazu ausgebildet ist, die Messpunkte (104.1, ..., 104.n) unter Verwendung der Radialgeschwindigkeiten (*v^{r}ₙ*) zu segmentieren und zumindest teilweise den Objektsegmenten (96.1, ..., 96.5) zuzuordnen.

3. Vorrichtung nach Anspruch 1, wobei die Steuer- und Auswerteeinheit dazu ausgebildet ist, den Überwachungsbereich (100a, 100b) des FMCW-LiDAR-Sensors (92a, 92b) mehrfach abzutasten und eine Vielzahl von zeitlich aufeinanderfolgenden Abtastungen des Überwachungsbereichs (100a, 100b) unter Verwendung der Geschwindigkeit (*v₀*), mit der sich das Fahrzeug (96) entlang der Fahrbahn (98) bewegt, zusammenzufassen.

4. Vorrichtung nach einem der Ansprüche 1 bis 3, wobei die Steuer- und Auswerteeinheit dazu ausgebildet ist, die Messpunkte (104.1, ..., 104.n) unter Verwendung der Radialgeschwindigkeit (*v^{r}ₙ*) der Messpunkte (104.1, ..., 104.n) zu filtern.

5. Vorrichtung nach Anspruch 3, wobei die Steuer- und Auswerteeinheit dazu ausgebildet ist, Messpunkte (104.1, ..., 104.n) mit einer Radialgeschwindigkeit (*v^{r}ₙ*) unter einem vorgegebenen Schwellenwert für die Auswertung zu verwerfen.

6. Vorrichtung nach einem der vorhergehenden Ansprüche, wobei die Vorrichtung wenigstens einen weiteren FMCW-LiDAR-Sensor mit einem weiteren Überwachungsbereich aufweist und sich der Überwachungsbereich mit dem weiteren Überwachungsbereich zumindest teilweise überschneidet.

7. Vorrichtung nach einem der vorhergehenden Ansprüche, wobei die Steuer- und Auswerteeinrichtung dazu ausgebildet ist, eine Rotation von Rädern (96.3, 96.4, 96.5) des Fahrzeugs (96) zu bestimmen.

8. Verfahren zur Überwachung einer Fahrbahn (98) und Erfassung wenigstens eines eine Vielzahl von Objektsegmenten (96.1, ..., 96.5) umfassenden Fahrzeugs (96) in einem Überwachungsbereich ( 100a, 100b) mit den Schritten:
- Aussenden von Sendelichtstrahlen (102.1, ..., 102.n) in den Überwachungsbereich (100a, 100b) mit wenigstens einem FMCW-LiDAR-Sensor (92a, 92b),
- Erfassen wenigstens einer Seite des Fahrzeugs (96), wenn das Fahrzeug (96) den FMCW-LiDAR-Sensor (92a, 92b) passiert.
- Abtasten einer Vielzahl von Messpunkten (104.1, ..., 104.n) im Überwachungsbereich (100a, 100b),
- Erzeugen von Messdaten aus von den Messpunkten (104.1, ..., 104.n) remittiertem oder reflektiertem Sendelicht, wobei die Messdaten (18) Radialgeschwindigkeiten (*v^{r}ₙ*) der Messpunkte (104.1, ..., 104.n) umfassen,
- Segmentieren der Messpunkte (104.1, ..., 104.n) und zumindest teilweises Zuordnen der Messpukte (104.1, ..., 104.n) zu den Objektsegmenten (96.1, ..., 96.5),
- Bestimmen eines Bewegungsmusters wenigstens eines der Objektsegmente (96.1, ..., 96.5) unter Verwendung der Radialgeschwindigkeiten (*v^{r}ₙ*) der den Objektsegmenten (96.1, ..., 96.5) zugeordneten Messpunkten (102.1, ..., 102.n).
- Bestimmen einer Geschwindigkeit (*v₀*), mit der sich das Fahrzeug (96) entlang der Fahrbahn (98) bewegt,
- Entzerren der den Objektsegmenten (96.1, ..., 96.5) zugeordneten Messdaten unter Verwendung der Geschwindigkeit (*v₀*), mit der sich das Fahrzeug (96) entlang der Fahrbahn (98) bewegt,
**gekennzeichnet durch** den weiteren Schritt
- Normieren der entzerrten Messdaten auf die Geschwindigkeit (*v₀*), mit der sich das Fahrzeug (96) entlang der Fahrbahn (98) bewegt.

9. Verfahren nach Anspruch 8, wobei die Messpunkte (104.1, ..., 104.n) unter Verwendung der Radialgeschwindigkeiten (*v^{r}ₙ*) der Messpunkte (104.1, ..., 104.n) segmentiert und zumindest teilweise zu einem Fahrzeug (96) und/oder Objektsegmenten des Fahrzeugs (96.1, ..., 96.5) zusammengefasst werden.

10. Verfahren nach Anspruch 8, wobei der Überwachungsbereich (100a, 100b) des FMCW-LiDAR-Sensors (92a, 92b) mehrfach abgetastet wird und eine Vielzahl von Abtastungen des Überwachungsbereichs (100a, 100b) unter Verwendung der Geschwindigkeit (*v₀*), mit der sich das Fahrzeug (96) entlang der Fahrbahn (98) bewegt, zusammengefasst werden.

11. Verfahren nach einem der Ansprüche 8 bis 10, mit dem weiteren Schritt:
- Filtern der Messpunkte (104.1, ..., 104.n) unter Verwendung der Radialgeschwindigkeiten (*v^{r}ₙ*) der Messpunkte (104.1, ..., 104.n).

## Claims

1. Apparatus (90) for monitoring a roadway (98) and detecting at least one vehicle (96) comprising a plurality of object segments (96.1, ... , 96.5) in a monitoring region (100a, 100b), comprising
- at least one FMCW LiDAR sensor (92a, 92b) for emitting transmitted light beams (102.1, ... , 102.n) into the monitoring region (100a, 100b), for scanning a plurality of measurement points (104.1, ... , 104.n) and for generating measurement data (18) from transmitted light remitted or reflected by the measurement points (104.1, ... , 104.n), wherein the measurement data comprise radial velocities (v'n) of the measurement points (104.1, ... , 104.n), wherein the FMCW LiDAR sensor (92a, 92b) is arranged such that at least one side of the vehicle (96) can be detected when the vehicle (96) passes the FMCW LiDAR sensor (92a, 92b).
- a control and evaluation unit for evaluating the measurement data (18),
wherein the control and evaluation unit is configured to segment the measurement points (104.1, ... , 104.n) and to assign them at least partially to the object segments (96.1, ... , 96.5), to determine a motion pattern of at least one of the object segments (96.1, ... , 96.5) using the radial velocities (v'n) of the measurement points assigned to the object segments (96.1, ... , 96.5), to determine a velocity (v0) at which the vehicle (96) moves along the roadway (98), and to correct distortion in the measurement data (18) of the measurement points assigned to the object segments (96.1, ... , 96.5) using the velocity (v0) at which the vehicle (96) moves along the roadway (98), **characterised in that** the control and evaluation unit is configured to normalise the distortion-corrected measurement data to the velocity (v0) at which the vehicle (96) moves along the roadway (98).

2. Apparatus according to claim 1, wherein the control and evaluation unit is configured to segment the measurement points (104.1, ... , 104.n) using the radial velocities (v'n) and to assign them at least partially to the object segments (96.1, ... , 96.5).

3. Apparatus according to claim 1, wherein the control and evaluation unit is configured to scan the monitoring region (100a, 100b) of the FMCW LiDAR sensor (92a, 92b) multiple times and to combine a plurality of temporally successive scans of the monitoring region (100a, 100b) using the velocity (v0) at which the vehicle (96) moves along the roadway (98).

4. Apparatus according to any one of claims 1 to 3, wherein the control and evaluation unit is configured to filter the measurement points (104.1, ... , 104.n) using the radial velocity (v'n) of the measurement points (104.1, ... , 104.n).

5. Apparatus according to claim 3, wherein the control and evaluation unit is configured to discard, for the evaluation, measurement points (104.1, ... , 104.n) having a radial velocity (v'n) below a predetermined threshold value.

6. Apparatus according to any one of the preceding claims, wherein the apparatus comprises at least one further FMCW LiDAR sensor having a further monitoring region, and the monitoring region at least partially overlaps the further monitoring region.

7. Apparatus according to any one of the preceding claims, wherein the control and evaluation device is configured to determine a rotation of wheels (96.3, 96.4, 96.5) of the vehicle (96).

8. Method for monitoring a roadway (98) and detecting at least one vehicle (96) comprising a plurality of object segments (96.1, ... , 96.5) in a monitoring region (100a, 100b), comprising the steps of:
- emitting transmitted light beams (102.1, ... , 102.n) into the monitoring region (100a, 100b) using at least one FMCW LiDAR sensor (92a, 92b),
- detecting at least one side of the vehicle (96) when the vehicle (96) passes the FMCW LiDAR sensor (92a, 92b).
- scanning a plurality of measurement points (104.1, ... , 104.n) in the monitoring region (100a, 100b),
- generating measurement data from transmitted light remitted or reflected by the measurement points (104.1, ... , 104.n), wherein the measurement data (18) comprise radial velocities (v'n) of the measurement points (104.1, ... , 104.n),
- segmenting the measurement points (104.1, ... , 104.n) and at least partially assigning the measurement points (104.1, ... , 104.n) to the object segments (96.1, ... , 96.5),
- determining a motion pattern of at least one of the object segments (96.1, ... , 96.5) using the radial velocities (v'n) of the measurement points (102.1, ... , 102.n) assigned to the object segments (96.1, ... , 96.5).
- determining a velocity (v0) at which the vehicle (96) moves along the roadway (98),
- correcting distortion in the measurement data assigned to the object segments (96.1, ... , 96.5) using the velocity (v0) at which the vehicle (96) moves along the roadway (98),
**characterised by** the further step of
- normalising the distortion-corrected measurement data to the velocity (v0) at which the vehicle (96) moves along the roadway (98).

9. Method according to claim 8, wherein the measurement points (104.1, ... , 104.n) are segmented using the radial velocities (v'n) of the measurement points (104.1, ... , 104.n) and are combined at least partially into a vehicle (96) and/or object segments of the vehicle (96.1, ... , 96.5).

10. Method according to claim 8, wherein the monitoring region (100a, 100b) of the FMCW LiDAR sensor (92a, 92b) is scanned multiple times and a plurality of scans of the monitoring region (100a, 100b) are combined using the velocity (v0) at which the vehicle (96) moves along the roadway (98).

11. Method according to any one of claims 8 to 10, comprising the further step of:
- filtering the measurement points (104.1, ... , 104.n) using the radial velocities (v'n) of the measurement points (104.1, ... , 104.n).

## Revendications

1. Dispositif (90) destiné à surveiller une chaussée (98) et à détecter au moins un véhicule (96) comprenant une pluralité de segments d'objet (96.1, ... , 96.5) dans une zone de surveillance (100a, 100b), comprenant
- au moins un capteur LiDAR FMCW (92a, 92b) destiné à émettre des faisceaux lumineux d'émission (102.1, ... , 102.n) dans la zone de surveillance (100a, 100b), à balayer une pluralité de points de mesure (104.1, ... , 104.n) et à générer des données de mesure (18) à partir de lumière d'émission rétrodiffusée ou réfléchie par les points de mesure (104.1, ... , 104.n), les données de mesure comprenant des vitesses radiales (v'n) des points de mesure (104.1, ... , 104.n), le capteur LiDAR FMCW (92a, 92b) étant disposé de telle sorte qu'au moins un côté du véhicule (96) puisse être détecté lorsque le véhicule (96) passe devant le capteur LiDAR FMCW (92a, 92b).
- une unité de commande et d'évaluation destinée à évaluer les données de mesure (18), l'unité de commande et d'évaluation étant configurée pour segmenter les points de mesure (104.1, ... , 104.n) et les attribuer au moins partiellement aux segments d'objet (96.1, ... , 96.5), déterminer un motif de mouvement d'au moins l'un des segments d'objet (96.1, ... , 96.5) en utilisant les vitesses radiales (v'n) des points de mesure attribués aux segments d'objet (96.1, ... , 96.5), déterminer une vitesse (v0) à laquelle le véhicule (96) se déplace le long de la chaussée (98), et corriger la distorsion des données de mesure (18) des points de mesure attribués aux segments d'objet (96.1, ... , 96.5) en utilisant la vitesse (v0) à laquelle le véhicule (96) se déplace le long de la chaussée (98), **caractérisé en ce que** l'unité de commande et d'évaluation est configurée pour normaliser les données de mesure corrigées de la distorsion par rapport à la vitesse (v0) à laquelle le véhicule (96) se déplace le long de la chaussée (98).

2. Dispositif selon la revendication 1, dans lequel l'unité de commande et d'évaluation est configurée pour segmenter les points de mesure (104.1, ... , 104.n) en utilisant les vitesses radiales (v'n) et les attribuer au moins partiellement aux segments d'objet (96.1, ... , 96.5).

3. Dispositif selon la revendication 1, dans lequel l'unité de commande et d'évaluation est configurée pour balayer plusieurs fois la zone de surveillance (100a, 100b) du capteur LiDAR FMCW (92a, 92b) et regrouper une pluralité de balayages successifs dans le temps de la zone de surveillance (100a, 100b) en utilisant la vitesse (v0) à laquelle le véhicule (96) se déplace le long de la chaussée (98).

4. Dispositif selon l'une des revendications 1 à 3, dans lequel l'unité de commande et d'évaluation est configurée pour filtrer les points de mesure (104.1, ... , 104.n) en utilisant la vitesse radiale (v'n) des points de mesure (104.1, ... , 104.n).

5. Dispositif selon la revendication 3, dans lequel l'unité de commande et d'évaluation est configurée pour écarter de l'évaluation des points de mesure (104.1, ... , 104.n) présentant une vitesse radiale (v'n) inférieure à une valeur seuil prédéterminée.

6. Dispositif selon l'une des revendications précédentes, dans lequel le dispositif comprend au moins un autre capteur LiDAR FMCW présentant une autre zone de surveillance, et la zone de surveillance chevauche au moins partiellement l'autre zone de surveillance.

7. Dispositif selon l'une des revendications précédentes, dans lequel le dispositif de commande et d'évaluation est configuré pour déterminer une rotation de roues (96.3, 96.4, 96.5) du véhicule (96).

8. Procédé destiné à surveiller une chaussée (98) et à détecter au moins un véhicule (96) comprenant une pluralité de segments d'objet (96.1, ... , 96.5) dans une zone de surveillance (100a, 100b), comprenant les étapes consistant à :
- émettre des faisceaux lumineux d'émission (102.1, ... , 102.n) dans la zone de surveillance (100a, 100b) au moyen d'au moins un capteur LiDAR FMCW (92a, 92b),
- détecter au moins un côté du véhicule (96) lorsque le véhicule (96) passe devant le capteur LiDAR FMCW (92a, 92b).
- balayer une pluralité de points de mesure (104.1, ... , 104.n) dans la zone de surveillance (100a, 100b),
- générer des données de mesure à partir de lumière d'émission rétrodiffusée ou réfléchie par les points de mesure (104.1, ... , 104.n), les données de mesure (18) comprenant des vitesses radiales (v'n) des points de mesure (104.1, ... , 104.n),
- segmenter les points de mesure (104.1, ... , 104.n) et attribuer au moins partiellement les points de mesure (104.1, ... , 104.n) aux segments d'objet (96.1, ... , 96.5),
- déterminer un motif de mouvement d'au moins l'un des segments d'objet (96.1, ... , 96.5) en utilisant les vitesses radiales (v'n) des points de mesure (102.1, ... , 102.n) attribués aux segments d'objet (96.1, ... , 96.5).
- déterminer une vitesse (v0) à laquelle le véhicule (96) se déplace le long de la chaussée (98),
- corriger la distorsion des données de mesure attribuées aux segments d'objet (96.1, ... , 96.5) en utilisant la vitesse (v0) à laquelle le véhicule (96) se déplace le long de la chaussée (98),
**caractérisé par** l'étape supplémentaire consistant à
- normaliser les données de mesure corrigées de la distorsion par rapport à la vitesse (v0) à laquelle le véhicule (96) se déplace le long de la chaussée (98).

9. Procédé selon la revendication 8, dans lequel les points de mesure (104.1, ... , 104.n) sont segmentés en utilisant les vitesses radiales (v'n) des points de mesure (104.1, ... , 104.n) et sont regroupés au moins partiellement en un véhicule (96) et/ou en segments d'objet du véhicule (96.1, ... , 96.5).

10. Procédé selon la revendication 8, dans lequel la zone de surveillance (100a, 100b) du capteur LiDAR FMCW (92a, 92b) est balayée plusieurs fois et une pluralité de balayages de la zone de surveillance (100a, 100b) sont regroupés en utilisant la vitesse (v0) à laquelle le véhicule (96) se déplace le long de la chaussée (98).

11. Procédé selon l'une des revendications 8 à 10, comprenant l'étape supplémentaire consistant à :
- filtrer les points de mesure (104.1, ... , 104.n) en utilisant les vitesses radiales (v'n) des points de mesure (104.1, ... , 104.n).
